# EUROPÄISCHE PATENTSCHRIFT

(11) **EP 0 966 617 B1**
(45) Veröffentlichungstag und Bekanntmachung des Hinweises auf die Patenterteilung: **26.05.2004**
(21) Anmeldenummer: 98959705.9
(22) Anmeldetag: 02.10.1998
(51) Int. Cl.: F16C 7/02

(54) **HEBEL**
LEVER
LEVIER ARTICULE

(30) Priorität: 14.01.1998 DE 19801059
(43) Veröffentlichungstag der Anmeldung: 29.12.1999
(73) Patentinhaber: ROBERT BOSCH GMBH, 70442 Stuttgart (DE)
(72) Erfinder: ZIMMER, Joachim, D-77880 Sasbach (DE); BECKER, Henk, D-76530 Baden-Baden (DE)
(86) Internationale Anmeldenummer: PCT/DE1998/002929
(87) Internationale Veröffentlichungsnummer: WO 1999/036705

(56) Entgegenhaltungen:
- EP-A- 0 439 764
- DE-A- 19 546 908
- DE-A- 19 700 180
- FR-A- 1 452 811
- FR-A- 2 385 935
- FR-A- 2 669 084
- US-A- 5 606 790

## Beschreibung

### Stand der Technik

Die Erfindung geht aus von einem Hebel mit den Merkmalen nach dem Oberbegriff des Anspruchs 1, siehe FR-A-2 669 084.

Hebel werden in vielfältiger Form zur Kraftübertragung verwendet, z.B. in Koppelgetrieben, als Gelenkhebel und als Befestigungshebel zur Verbindung mit angetriebenen Wellen. Im Kraftfahrzeug benutzt man sie u.a. zum Antrieb von Scheibenwischern. Häufig sind sie aus einem mittleren u-förmigen Trägerprofil aufgebaut, das an seinen flachen Enden in Bohrungen durch Spritzgießen eingegossene Anschlußstücke in Form von Kugelschalen aufweist. Die Kugelschalen stützen sich auf einer kleinen Fläche ab, die sich im wesentlichen aus der geringen Wandstärke bzw. Materialdicke ergibt.

Es sind bereits Hebel für Scheibenwischer bekannt, die aus Zink oder einer Zinklegierung durch Druckgießen in einer Druckgießform hergestellt werden (DE 44 44 328 A1). Jeder Hebel hat an einem Ende eine konische Nabe, die mit einer ebenfalls konischen Achse verbindbar ist. Im Bereich der Nabe ist ein Verstärkungselement vorgesehen, das seelenartig in den Hebel eingegossen ist. Die Herstellung solcher Hebel ist aufwendig.

Es ist aus der Zeitschrift "Werkstatt und Betrieb", Carl Hanser Verlag München, 1995, Seiten 812 bis 815, und dem Sonderdruck aus der Zeitschrift "Metallumformtechnik", Claus Dannert Verlag, 1994, unter dem Titel "Präzisions-Werkstücke in Leichtbauweise, hergestellt durch Innenhochdruck-Umformen", ein Verfahren zum Umformen von Rohren zu Werkstücken bekannt. Dieses Verfahren, das vor allem für die Kraftfahrzeugindtistrie verwendet wird, arbeitet mit hohen Drücken.

Das umzuformende Rohrstück wird in ein geteiltes Werkzeug gelegt, in das die gewünschte Werkstückform eingearbeitet ist. Das Werkzeug, das in einer Presse montiert ist, wird durch einen vertikal arbeitenden Pressenstößel geschlossen. Die Rohrstückenden werden durch Schließwerkzeuge dichtend geschlossen, durch die ein Druckmedium zugeführt wird, das die Rohrwandungen gegen die innere Werkzeugform preßt. Dabei wird von horizontal wirkenden Stößeln ein axialer Druck auf das Rohrstück aufgebracht; der sich dem Innendruck überlagert. Somit wird der Werkstoff, der für die Umformung erforderlich ist, nicht nur aus der Wanddicke des Rohrstücks entnommen, sondern auch durch die Verkürzung des Rohrs zur Verfügung gestellt. Die Schließwerkzeuge werden während des Umformens axial nachgeführt.

### Vorteile der Erfindung

Nach der Erfindung weist der Hebel ein Hohlprofil aus spanlos verformbarem Werkstoff auf, das an mindestens einem Ende eine Aufnahmekammer für ein vorgefertigtes Anschlußstück bildet. Die Wände der Aufnahmekammer liegen mit ihren Wandinnenseiten fest an den Stirnseiten und am Umfang des Anschlußstücks an, so daß dieses sicher, gleichmäßig, unverlierbar und von zwei gegenüberliegenden Wänden des Hohlprofils umfaßt wird. Die Anlageflächen zwischen den Wänden des Hohlprofils und dem Anschlußstück sind unabhängig von der Wandstärke und erfüllen die Forderungen an eine gleichmäßige Krafteinleitung und gute Kraftübertragung. Ferner fügt sich das Anschlußstück harmonisch in die Kontur des Hebels ein.

Je nach Funktion können die Anschlußstücke sehr unterschiedlich gestaltet werden, so daß mit den gleichen Hohlprofilen und unterschiedlichen Anschlußstücken eine Vielzahl von Hebelvarianten hergestellt werden kann. So können die Anschlußstücke eine Lagerbohrung für ein Schwenklager, eine Kugelschale für ein Kugelgelenk oder eine Gewindebohrung für eine Befestigungsschraube aufweisen. Die Lagerbohrung kann auch als Durchgangsloch für eine Befestigungsschraube dienen.

Um die Anlageflächen zwischen dem Anschlußstück und den Wänden des Hohlprofils zu vergrößern, ist es zweckmäßig, daß das Anschlußstück einen Kragen aufweist, an den die Wände der Aufnahmekammer angepreßt werden. Der Kragen dient gleichzeitig zur besseren Ausrichtung des Anschlußstücks zum Hohlprofil und gibt ihm eine stabilere Lage. Dies wird ferner dadurch begünstigt, daß die Dicke des Kragens zum äußeren Umfang hin zunimmt, so daß sich nach innen hin eine Hinterschneidung ergibt, in die die Wände der Aufnahmekammer gedrückt werden.

Um das Anschlußstück vor dem Preßvorgang auszurichten und provisorisch in der Aufnahmekammern zu halten, ist es zweckmäßig, daß die Aufnahmekammern zum mittleren Teil des Hohlprofils vorgeformte Sicken haben, an die das Anschlußstück angelegt und zwischen die es mit seinem Kragen gesteckt oder geklemmt werden kann.

Nach weiteren Ausgestaltungen der Erfindung sind Formschlußelemente vorgesehen, die in Umfangsrichtung des Anschlußstücks eine formschlüssige Verbindung zwischen dem Anschlußstück und der Aufnahmekammer herstellen. Dies wird in vorteilhafter Weise dadurch erreicht, daß das Anschlußstück oder sein Kragen stirnseitig oder am Umfang eine oder mehrere Vertiefungen aufweist, in die die Wände der Aufnahmekammer gepreßt oder verstemmt werden. Ferner kann die Querschnittskontur des Anschlußstücks eine Form aufweisen, die von der eines Rotationskörper abweicht, z.B. ein Polygon oder Oval. In vielen Fällen wird eine Abflachung am Umfang das Anschlußstück ausreichend gegen Verdrehen sichern.

Je nach Anwendungsfall kann es wünschenswert sein, daß die Anschlußstücke nach zwei Seiten oder nur nach einer Seite hin offen sind. Diese zwei Varianten können nach der Erfindung in einfacher Weise dadurch abgedeckt werden, daß die Aufnahmekammer des Hohlprofils im einen Fall zwei gegenüberliegende Anschlußöffnungen und im anderen nur eine Anschlußöffnung aufweist. Im zweiten Fall lassen sich weitgehend geschlossene und damit geschützte Gelenklager einfach mit den gleichen Anschlußstücken herstellen.

Die Hebel mit einem Hohlprofil besitzen eine größere Torsionssteifigkeit, so daß die Wandstärke gegenüber offenen Profilen bei gleicher Torsions- und Biegesteifigkeit reduziert werden kann. Das bedeutet weniger Materialeinsatz und geringeres Gewicht. Ferner werden durch die Hohlprofile scharfe Kanten weitgehend vermieden und damit eine Verletzungsgefahr praktisch ausgeschlossen.

Das Hohlprofil wird nach der Erfindung mit einem Innenhochdruck-Umformverfahren gemäß Anspruch 14 hergestellt.

Die Rohrenden werden zweckmäßigerweise durch die Dichtwerkzeuge axial nachgeschoben. Somit wird während des Umformens auf die Rohrenden ein axialer Druck ausgeübt und man erreicht gleichmäßige Wandstärken und präzise Konturen, die keine oder nur geringe mechanische Nacharbeiten erfordern.

Durch Taumelschmieden, ein Verfahren, bei dem ein Preßwerkzeug während des Preßvorgangs eine Taumelbewegung um die Vorschubachse ausführt, werden die Preßkräfte reduziert.

Das Verfahren nach der Erfindung läßt eine flexible Formgestaltung zu, so daß Hebel selbst in einer komplexen Version leicht herzustellen sind, die den zur Verfügung stehenden Bauraum gut nutzen. So lassen sich Hebel mit unterschiedlichsten Hohlprofilen sowohl in Längsrichtung als auch in Querrichtung herstellen, die den entsprechend dem Einsatzfall unterschiedlichen Anforderungen an Bauraum, Torsionssteifigkeit, Biegesteifigkeit und Geräuschentwicklung gerecht werden.

Für das Verfahren verwendet man vorteilhaft verzinktes Stahlrohr mit einer geringen Festigkeit oder ein Rohr aus einer Aluminiumlegierung. Sie sind ausreichend fließfähig und korrosionsbeständig, und brauchen nicht nachbehandelt zu werden. Daneben haben Aluminiumlegierungen noch weitere Gewichtsvorteile. Es werden sowohl nahtlose als auch längsgeschweißte Rohre verwendet.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längsschnitt durch einen erfindungsgemäßen Hebel,
- Fig. 2-8: einen vergrößerten Teillängsschnitt durch einen Endbereich eines Hebels bzw. eines Anschlußstücks in verschiedenen Varianten,
- Fig. 9-10: eine Draufsicht eines Anschlußstücks in verschiedenen Ausführungen und
- Fig. 11: einen schematischen Längsschnitt durch eine Werkzeugform zur Herstellung eines erfindungsgemäßen Hebels.

### Beschreibung der Ausführungsbeispiele

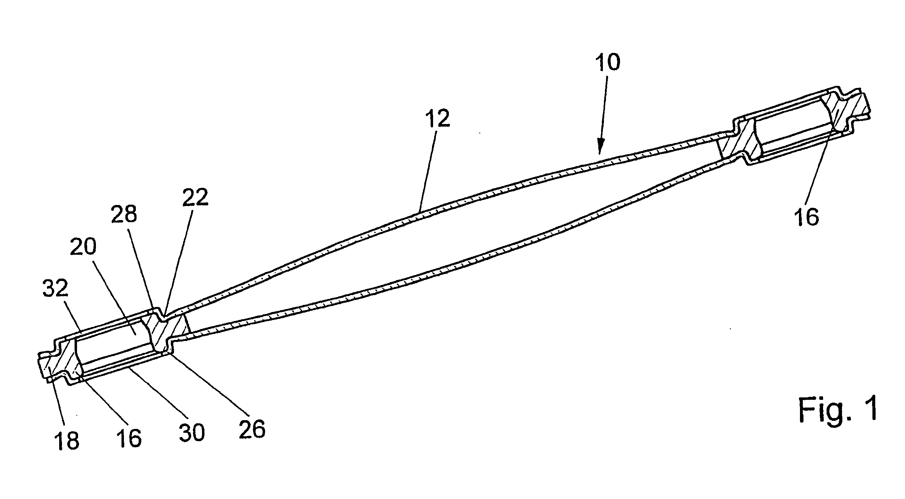

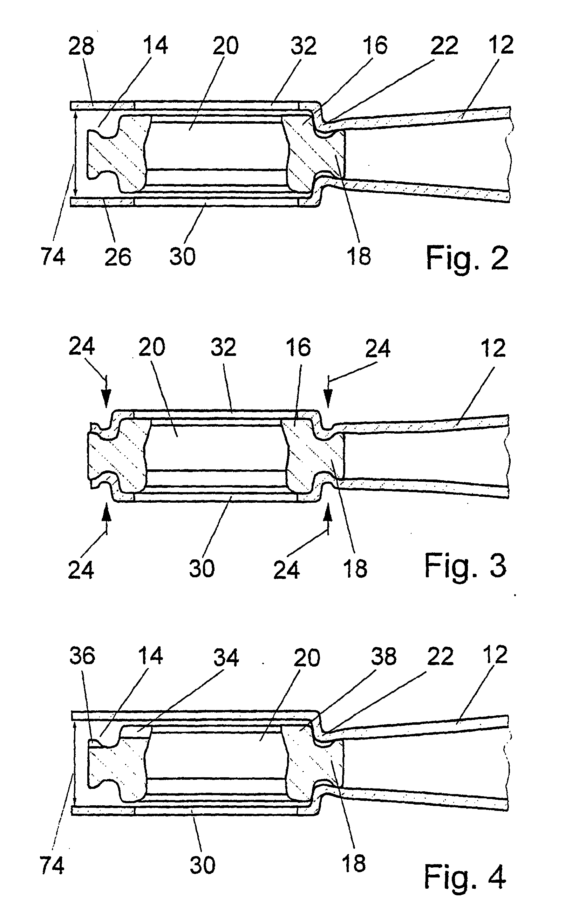

Der Hebel 10 nach Fig. 1 ist ein Gelenkhebel mit einem Hohlprofil 12, das an seinen Enden Aufnahmekammern 14 bildet (Fig. 2), in die durch Öffnungen 74 Anschlußstücke 16 eingebracht sind. Entsprechend der Biegebeanspruchung nimmt der Querschnitt des Hohlprofils 12 zur Mitte des Hebels 10 zu.

Die Anschlußstücke 16 haben an ihrem Umfang einen Kragen 18, dessen Dicke nach außen hin zunimmt, so daß eine Hinterschneidung entsteht, in die Wände 26 und 28 der Aufnahmekammer 14 gepreßt werden. Die Wände 26 und 28 liegen somit an einer großen Anlagefläche sowohl an Stirnflächen des Anschlußstücks 16, an seinen Umfangsflächen und am Kragen 18 an.

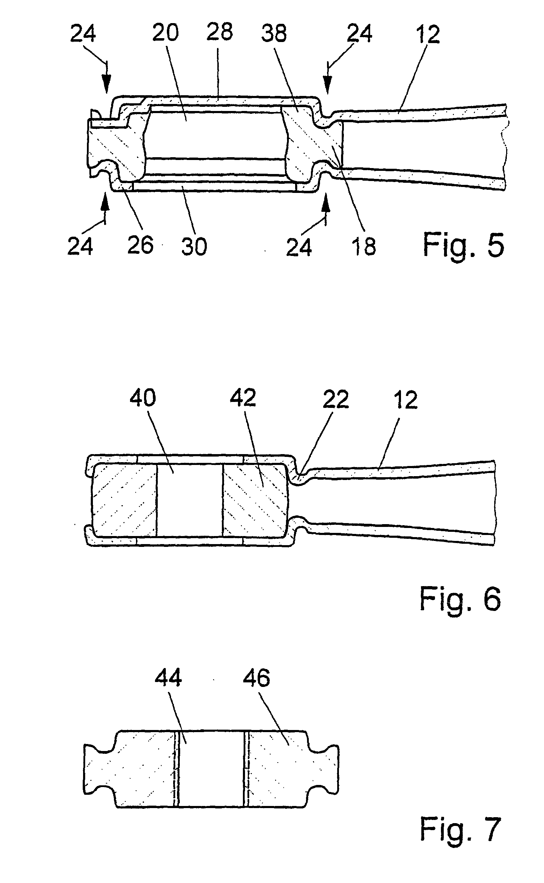

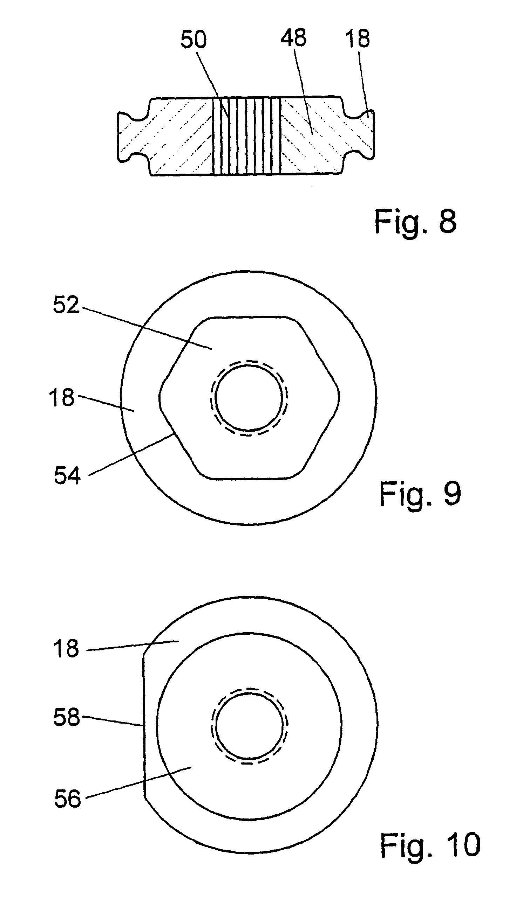

Fig. 2 zeigt das Anschlußstück 16 vor dem Preßvorgang. Um es zum Hohlprofil 12 auszurichten und provisorisch zu halten, sind am Hohlprofil 12 zum mittleren Teil hin vorgeformte Sikken 22 vorgesehen, an denen das Anschlußstück 16 anliegt und zwischen denen der Kragen 18 gehalten wird. Nach dem Preßvorgang ergibt sich der fertige.Hebel nach Fig. 3. Die Preßrichtung ist mit 24 gekennzeichnet. Die Anschlußstücke können unterschiedlich gestaltet werden. Während die Anschlußstücke 16 und 38 eine Kugelschale 20 für ein Kugelgelenk aufweisen, besitzt ein Anschlußstück 42 (Fig. 6) eine Lagerbohrung oder Durchgangsbohrung 40, ein Anschlußstück 46 (Fig. 7) eine Gewindebohrung 44 und ein Anschlußstück 48 (Fig. 8) eine Bohrung mit einem Mitnahmeprofil 50.

Ferner können die Anschlußstücke unterschiedliche Sicherungen gegen Verdrehen aufweisen. So zeigt das Anschlußstück 38 eine Aussparung 34 an einer Stirnseite und eine Aussparung 36 an seinem Kragen 18. In die Aussparungen 34 und 36 ist die Wand 28 hineingedrückt oder verstemmt (Fig. 5), so daß das Anschlußstück 38 gegenüber dem Hohlprofil 12 gegen Verdrehen gesichert ist. Die Aussparungen 34 und 36 können einzeln oder gemeinsam angewendet, an einer Stirnseite oder an beiden Stirnseiten angebracht werden. Entsprechende Aussparungen können auch an den Umfangsflächen des Anschlußstücks 38 vorgesehen werden. Das Anschlußstück 52 hat eine von einem Rotationskörper abweichende Querschnittskontur 54 in Form eines Polygons. Eine derartige Querschnittskontur kann auch am Kragen 18 angeordnet werden. Fig. 10 zeigt ein Anschlußstück 56, das am Umfang eine Abflachung 58 aufweist, die als Verdrehungssicherung dient.

Im Bereich der Anschlußstücke 16, 38, 42, 46, 48, 52, 56 besitzt die Aufnahmekammer 14 mindestens eine Anschlußöffnung 30, 32. Somit lassen sich Hebel 10 herstellen, die gegenüberliegende Anschlußöffnungen 30 und 32 aufweisen (Fig. 2, Fig. 3), und ferner Hebel 10, die nur eine Anschlußöffnung 30 haben und im übrigen geschlossen sind (Fig. 4, Fig. 5).

Der erfindungsgemäße Hebel und das Verfahren zur seiner Herstellung decken somit mit einfachen Mitteln eine große Variantenvielzahl ab.

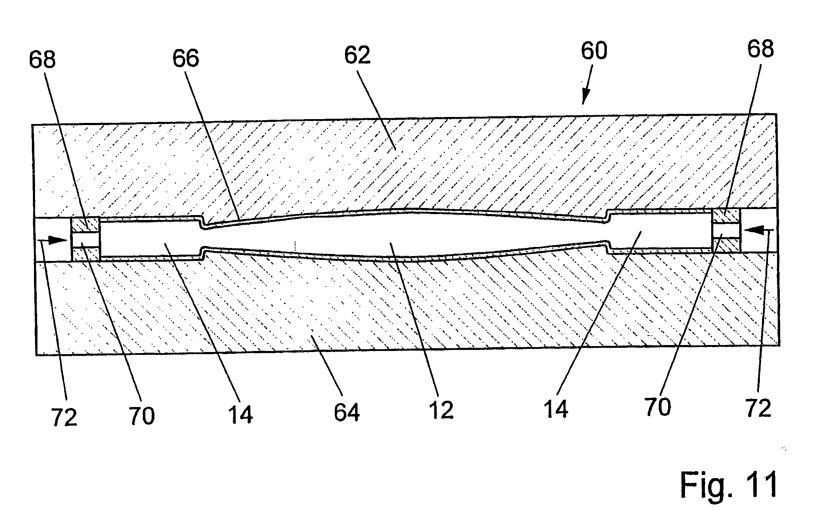

Fig. 11 zeigt an dem Beispiel eines Hohlprofils 12 mit zwei endseitigen Aufnahmekammern 14 einen schematischen Längsschnitt durch eine Werkzeugform 60 für das Innenhochdruckverfahren. Ein Rohrstück 66 wird in eine geteilte Werkzeugform 60 mit einem Oberteil 62 und einem Unterteil 64 gelegt. Die Rohrenden werden durch Dichtwerkzeuge 68 geschlossen. Eine nicht dargestellte Presse schließt die Werkzeugform 60. Dabei kann das Rohrstück 66 bereits vorgeformt werden. Es ist auch möglich sonstwie vorgeformte Rohrstücke 66 zu verwenden. Dies ist besonders bei komplexeren Formen zweckmäßig.

Unter hohem Druck wird durch Bohrungen 70 in den Dichtwerkzeugen 68 Druckmittel in das Rohrstück 66 gepreßt, so daß sich das Rohrstück 66 an die Innenkontur der Werkzeugform 60 anlegt und sie ausformt. Danach wird das Hohlprofil 12 aus der Werkzeugform 60 entnommen. Die Anschlußöffnungen 30 und 32 sowie die Öffnung 74 werden z. B. durch Abtrennen eines Teils des Rohrstücks 66 oder durch Bohren oder Stanzen hergestellt.

Das Rohrstück 66 kann aus vielerlei Werkstoff bestehen. Als besonders günstig hat sich ein verzinktes Stahlrohr mit niedriger Festigkeit erwiesen; aber auch Rohrstücke 66 aus einer Aluminiumlegierung sind wegen ihres geringen Gewichts und ihrer guten Korrosionsbeständigkeit sehr vorteilhaft.

Um möglichst gleichmäßige Wandstärken zu erzielen, werden zweckmäßigerweise während des Umformens des Rohrstücks 66 die Rohrenden mit den Dichtwerkzeugen 68 in Richtung der Pfeile 72 nachgeschoben. Dadurch wird der Werkstoff zum Ausformen des Hohlprofils 12 nicht nur der Wandstärke des übrigen Rohrstücks 66 entnommen, sondern auch aus der Verkürzung des Rohrstücks 66 zur Verfügung gestellt.

## Patentansprüche

1. Hebel (10) mit einem an mindestens einem seiner Enden angeordneten Anschlußstück (16, 38, 42, 46, 48, 52, 56), wobei ein Hohlprofil (12) aus spanlos verformbarem Werkstoff an dem mindestens einen Ende für das vorgefertigte Anschlußstück (16,38, 42, 46, 48, 52, 56) eine Aufnahmekammer (14) bildet, **dadurch gekennzeichnet, daß** die Wände (26, 28) der Aufnahmekammer (14) mit ihren Wandinnenseiten am Umfang und an den Stirnseiten des Anschlußstücks(16, 38, 42, 46, 48, 52, 56) fest anliegen.

2. Hebel(10) nach Anspruch 1, **dadurch gekennzeichnet, daß** das Anschlußstück (16, 38, 46, 48, 52, 56) am Umfang einen Kragen (18) hat, an den zwei einander gegenüberliegende Wände (26, 28) der Aufnahmekammer (14) gepreßt sind.

3. Hebel(10) nach einem der vorhergehenden Ansprüche, **dadurch gekennzeichnet, daß** das Anschlußstück (16, 38, 42, 46, 48, 52, 56) stirnseitig Formschlußelemente (34, 36) aufweist, in die die Wände (26, 28) eingepreßt sind.

4. Hebel(10) nach einem der vorhergehenden Ansprüche, **dadurch gekennzeichnet, daß** das Anschlußstück (16, 38, 42, 46, 48, 52, 56) am Umfang Formschlußelemente aufweist, in die die Wände (26, 28) eingepreßt sind.

5. Hebel (10) nach Anspruch 2 und 3 oder 4, **dadurch gekennzeichnet, daß** die Fomschlußelemente (34, 36) am Kragen (18) angeordnet sind.

6. Hebel(10) nach einem der vorhergehenden Ansprüche 2-5, **dadurch gekennzeichnet, daß** das Anschlußstück (52, 56) insgesamt und/oder der Kragen (18) eine von einem Rotationskörper abweichende Querschnittskontur (54, 58) aufweisen.

7. Hebel(10) nach einem der vorhergehenden Ansprüche, **dadurch gekennzeichnet, daß** das Anschlußstück (42) eine Lagerbohrung (40) eines Schwenklagers aufweist.

8. Hebel(10) nach einem der Ansprüche 1 bis 6, **dadurch gekennzeichnet, daß** das Anschlußstück (46) eine Gewindebohrung (44) aufweist.

9. Hebel(10) einem der Ansprüche 1 bis 6, **dadurch gekennzeichnet, daß** das Anschlußstück (48) eine Bohrung mit einem formschlüssigen Mitnahmeprofil (50) aufweist.

10. Hebel(10) nach einem der Ansprüche 2 bis 9, **dadurch gekennzeichnet, daß** die Dicke des Kragens (18) nach außen zunimmt.

11. Hebel(10) nach einem der vorhergehenden Ansprüche, **dadurch gekennzeichnet, daß** die Wände (26, 28) der Aufnahmekammer (14) nur eine Anschlußöffnung (30, 32) aufweisen.

12. Hebel(10) nach einem der Ansprüche 1 bis 10, **dadurch gekennzeichnet, daß** die Wände (26, 28) der Aufnahmekammer (14) zwei einander gegenüberliegende Anschlußöffnungen (30, 32) aufweisen.

13. Hebel(10) nach einem der vorhergehenden Ansprüche, **dadurch gekennzeichnet, daß** das Hohlprofil (12) einen belastungsgerechten Querschnittsverlauf aufweist und mit dem Innenhochdruck-Umformverfahren hergestellt ist.

14. Verfahren zur Herstellung eines Hebels (10) nach einem der vorhergehenden Ansprüche, **dadurch gekennzeichnet, daß**
- ein Rohrstück (66) in eine geteilte Werkzeugform (60) gelegt wird,
- die Rohrenden durch Dichtwerkzeuge (68) geschlossen werden,
- die Werkzeugform (60) geschlossen wird,
- durch mindestens ein Dichtwerkzeug (68) Druckmittel zugeführt wird,
- die Innenkontur der Werkzeugform (60) mit Hohlräumen für das Hohlprofil (12) und mindestens einer endseitig angeordneten Aufnahmekammer (14) durch Druckaufbau ausgeformt wird,
- das Hohlprofil (12) aus der Werkzeugform (60) entnommen wird und die mindestens eine angeformte Aufnahmekammer (14) geöffnet wird,
- das mindestens eine vorgefertigte Anschlußstück (16) in die Aufnahmekammer (14) eingelegt und mit diesen verpreßt wird derart, daß die Wände (26, 28) der Aufnahmekammer (14) mit ihren Wandinnenseiten am Umfang und en den Stirnseiten des Auschlußstückes (16, 38, 42, 46, 48, 52, 56) fest anliegen.

15. Verfahren nach Anspruch 14, **dadurch gekennzeichnet, daß** als Rohrstück (66) ein verzinktes Stahlrohr mit niedriger Festigkeit verwendet wird.

16. Verfahren nach Anspruch 14, **dadurch gekennzeichnet, daß** ein Rohrstück (66) aus einer Aluminiumlegierung verwendet wird.

17. Verfahren nach einem der Ansprüche 14 bis 16, **dadurch gekennzeichnet, daß** während des Umformens des Rohrstücks (66) die Rohrenden mit den Dichtwerkzeugen (68) nachgeschoben werden.

18. Verfahren nach einem der Ansprüche 14 bis 17, **dadurch gekennzeichnet, daß** die Anschlußöffnungen (30, 32) durch Stanzen hergestellt werden.

19. Verfahren nach einem der Ansprüche 19 bis 18, **dadurch gekennzeichnet, daß** die Anschlußöffnungen (30, 32) in einer gleichen Berarbeitungsstation in einem sich anschließenden Arbeitsgang hergestellt werden.

20. Verfahren nach einem der Ansprüche 14 bis 19, **dadurch gekennzeichnet, daß** die Anschlußstücke (16) in die Aufnahmekammern (14) gelegt und die Wände (26, 28) der Aufnahmekammern (14) an die Kragen (18) der Anschlußstücke (16) durch Taumelschmieden angelegt werden.

21. Verfahren nach einem der Ansprüche 14 bis 20, **dadurch gekennzeichnet, daß** in den Wänden (26, 28) der Aufnahmekammern (14) zum mittleren Teil des Hohlprofils (12) hin Sicken (22) mit dem Innenhochdruck-Umformverfahren vorgeformt werden.

## Claims

1. Lever (10) having a connection piece (16, 38, 42, 46, 48, 52, 56) arranged at at least one of its ends, a hollow section (12) which is made from material which can be deformed without chips being formed forming a receiving chamber (14) for the prefabricated connection piece (16, 38, 42, 46, 48, 52, 56) at the at least one end, **characterized in that** the inner sides of the walls (26, 28) of the receiving chamber (14) bear fixedly against the periphery and the end sides of the connection piece (16, 38, 42, 46, 48, 52, 56).

2. Lever (10) according to Claim 1, **characterized in that** the connection piece (16, 38, 42, 46, 48, 52, 56), on the periphery, has a collar (18) onto which two opposite walls (26, 28) of the receiving chamber (14) are pressed.

3. Lever (10) according to one of the preceding claims, **characterized in that** the connection piece (16, 38, 42, 46, 48, 52, 56) has end-side positively locking elements (34, 36) into which the walls (26, 28) are pressed.

4. Lever (10) according to one of the preceding claims, **characterized in that** the connection piece (16, 38, 42, 46, 48, 52, 56), on the periphery, has positively locking elements into which the walls (26, 28) are pressed.

5. Lever (10) according to Claim 2 and 3 or 4, **characterized in that** the positively locking elements (34, 36) are arranged on the collar (18).

6. Lever (10) according to one of the preceding Claims 2-5, **characterized in that** the connection piece (52, 56) overall and/or the collar (18) have a cross-sectional contour (54, 58) which deviates from a body of revolution.

7. Lever (10) according to one of the preceding claims, **characterized in that** the connection piece (42) has a bearing bore (40) of a pivot bearing.

8. Lever (10) according to one of Claims 1 to 6, **characterized in that** the connection piece (46) has a threaded bore (44).

9. Lever (10) according to one of Claims 1 to 6, **characterized in that** the connection piece (48) has a bore with a positively locking driver profile (50).

10. Lever (10) according to one of Claims 2 to 9, **characterized in that** the thickness of the collar (18) increases towards the outside.

11. Lever (10) according to one of the preceding claims, **characterized in that** the walls (26, 28) of the receiving chamber (14) have only one connection opening (30, 32).

12. Lever (10) according to one of Claims 1 to 10, **characterized in that** the walls (26, 28) of the receiving chamber (14) have two connection openings (30, 32) lying opposite one another.

13. Lever (10) according to one of the preceding claims, **characterized in that** the hollow section (12) has a cross-sectional profile which is suitable for the loads which occur and is produced using the hydroforming process.

14. Process for producing a lever (10) according to one of the preceding claims, **characterized in that**
- a tube piece (66) is placed into a split die (60),
- the tube ends are closed off by sealing tools (68),
- the die (60) is closed,
- pressure medium is supplied through at least one sealing tool (68),
- the inner contour of the die (60) with cavities for the hollow section (12) and at least one receiving chamber (14) arranged at the end is formed by building up the pressure,
- the hollow section (12) is removed from the die (60) and the at least one integrally formed receiving chamber (14) is opened,
- the at least one prefabricated connection piece (16) is inserted into the receiving chamber (14) and pressed to it in such a manner that the inner sides of the walls (26, 28) of the receiving chamber (14) bear fixedly against the periphery and the end sides of the connection piece (16, 38, 42, 46, 48, 52, 56).

15. Process according to Claim 14, **characterized in that** the tube piece (66) used is a galvanized steel tube of low strength.

16. Process according to Claim 14, **characterized in that** a tube piece (66) made from an aluminium alloy is used.

17. Process according to one of Claims 14 to 16, **characterized in that** during the deformation of the tube piece (66) the tube ends are pushed up by the sealing tools (68).

18. Process according to one of Claims 14 to 17, **characterized in that** the connection openings (30, 32) are produced by stamping.

19. Process according to one of Claims 14 to 18, **characterized in that** the connection openings (30, 32) are produced in a subsequent operation in the same processing station.

20. Process according to one of Claims 14 to 19, **characterized in that** the connection pieces (16) are placed into the receiving chambers (14) and the walls (26, 28) of the receiving chambers (14) are placed onto the collars (18) of the connection pieces (16) by orbital forging.

21. Process according to one of Claims 14 to 20, **characterized in that** beads (22) facing towards the centre part of the hollow section (12) are preformed in the walls (26, 28) of the receiving chamber (14) using the hydroforming process.

## Revendications

1. Levier (10) comportant sur au moins l'une de ses extrémités, une pièce de raccordement (16, 38, 42, 46, 48, 52, 56), avec sur cette au moins une extrémité un profilé creux (12) en un matériau déformable sans enlèvement de copeaux qui forme une chambre de réception (14) pour la pièce de raccordement (16, 38, 42, 46, 48, 52, 56) préfabriquée,
**caractérisé en ce que**
les parois (26, 28) de la chambre de réception (14) reposent de manière fixe par leur face intérieure de paroi contre la périphérie et contre les faces frontales de la pièce de raccordement (16, 38, 42, 46, 48, 52, 56).

2. Levier (10) selon la revendication 1,
**caractérisé en ce que**
la pièce de raccordement (16, 38, 42, 46, 48, 52, 56) possède sur sa périphérie un col (18) contre lequel deux parois (26, 28) situées face à face de la chambre de réception (14) sont pressées.

3. Levier (10) selon l'une quelconque des précédentes revendications,
**caractérisé en ce que**
la pièce de raccordement (16, 38, 42, 46, 48, 52, 56) présente côté frontal des éléments de forme adaptatée (34, 36) à l'intérieur desquels les parois (26, 28) sont pressées.

4. Levier (10) selon l'une quelconque des précédentes revendications,
**caractérisé en ce que**
la pièce de raccordement (16, 38, 42, 46, 48, 52, 56) présente sur la périphérie des éléments de forme adaptée, à l'intérieur desquels les parois (26, 28) sont pressées.

5. Levier (10) selon les revendications 2 et 3 ou 4,
**caractérisé en ce que**
les éléments de forme adaptée (34, 36) sont disposés au niveau du col (18).

6. Levier (10) selon l'une quelconque des précédentes revendications 2 à 5,
**caractérisé en ce que**
la pièce de raccordement (52, 56) globalement et/ou le col (18) présentent un contour de section transversale (54, 58) qui diffère de celui d'un corps de révolution.

7. Levier (10) selon l'une quelconque des précédentes revendications,
**caractérisé en ce que**
la pièce de raccordement (42) présente un perçage de palier (40) d'un palier pivotant.

8. Levier (10) selon l'une quelconque des revendications 1 à 6,
**caractérisé en ce que**
la pièce de raccordement (46) présente un perçage fileté (44).

9. Levier (10) selon l'une quelconque des revendications 1 à 6,
**caractérisé en ce que**
la pièce de raccordement (48) présente un perçage comportant un profil d'entraînement (50) en adaptation de forme.

10. Levier (10) selon l'une quelconque des revendications 2 à 9,
**caractérisé en ce que**
l'épaisseur du col (18) augmente vers l'extérieur.

11. Levier (10) selon l'une quelconque des précédentes revendications,
**caractérisé en ce que**
les parois (26, 28) de la chambre de réception (14) ne présentent qu'une ouverture de raccordement (30, 32).

12. Levier (10) selon l'une quelconque des revendications 1 à 10,
**caractérisé en ce que**
les parois (26, 28) de la chambre de réception (14) présentent deux ouvertures de raccordement (30, 32) l'une en face de l'autre.

13. Levier (10) selon l'une quelconque des précédentes revendications,
**caractérisé en ce que**
le profilé creux (12) présente une évolution de sa section transversale adaptée à la charge et réalisée au moyen du procédé de mise en forme par haute pression interne.

14. Procédé de fabrication d'un levier (10) selon l'une quelconque des précédentes revendications,
**caractérisé en ce qu'**
- un tronçon de tube (66) est posé dans une forme d'outil (60) partagée,
- les extrémités du tube sont fermées par des outils d'étanchéité (68),
- la forme d'outil (60) est fermée,
- un fluide est apporté par au moins un outil d'étanchéité (68),
- le contour intérieur de la forme d'outil (60) avec des espaces creux pour le profilé creux (12) et au moins une chambre de réception (14) disposée côté extrémité, est mis en forme par augmentation de pression,
- le profilé creux (12) est extrait de la forme d'outils (60) et la au moins une chambre de réception (14) formée est ouverte
- la pièce de raccordement (16) préfabriquée une est déposée dans la au moins chambre de réception (14) et pressée avec celle-ci de manière telle que les parois (26, 28) de la chambre de réception (14) reposent de manière fixe par leurs côtés intérieurs de paroi à la périphérie et aux côtés frontaux de la pièce de raccordement (16, 38, 42, 46, 48, 52, 56).

15. Procédé selon la revendication 14,
**caractérisé en ce qu'**
un tuyau d'acier galvanisé de faible résistance est utilisé en tant que tronçon de tube (66).

16. Procédé selon la revendication 14,
**caractérisé en ce qu'**
on utilise un tronçon de tube (66) en un alliage d'aluminium.

17. Procédé selon l'une quelconque des revendications 14 à 16,
**caractérisé en ce que**,
pendant la déformation du tronçon de tube (66), les extrémités du tube sont poussées par les outils d'étanchéité (68).

18. Procédé selon l'une quelconque des revendications 14 à 17,
**caractérisé en ce que**
les ouvertures de raccordement (30, 32) sont fabriquées par découpage à la presse.

19. Procédé selon l'une quelconque des revendications 14 à 18,
**caractérisé en ce que**
les ouvertures de raccordement (30, 32) sont fabriquées dans une même station d'usinage en une phase de travail suivante.

20. Procédé selon l'une quelconque des revendications 14 à 19,
**caractérisé en ce que**
les pièces de raccordement (16) sont posées dans les chambres de réception (14) et les parois (26, 28) des chambres de réception (14) sont appliquées au col (18) des pièces de raccordement (16) par pressage à excentrique.

21. Procédé selon l'une quelconque des revendications 14 à 20,
**caractérisé en ce que**
des moulures (22) sont préformées par procédé de déformation par haute pression interne dans les parois (26, 28) des chambres de réception (14) en direction de la partie médiane du profilé creux (12).
